Europäisches Patentamt

European Patent Office

Office européen des brevets

(19)

(11) Publication number: **0 029 504**
**B1**

(12) # EUROPEAN PATENT SPECIFICATION

(45) Date of publication of patent specification: **14.09.83**

(51) Int. Cl.³: **C 09 K 5/06, C 01 F 5/38**

(21) Application number: **80106392.6**

(22) Date of filing: **21.10.80**

(54) **Hydrated magnesium nitrate reversible phase change compositions and their preparation.**

(30) Priority: **02.11.79 US 90789**
**02.11.79 US 90730**
**02.11.79 US 90784**

(43) Date of publication of application:
**03.06.81 Bulletin 81/22**

(45) Publication of the grant of the patent:
**14.09.83 Bulletin 83/37**

(84) Designated Contracting States:
**BE CH DE FR GB IT LI NL SE**

(56) References cited:
**AT - B - 322 504**
**DE - A - 2 550 106**
**DE - A - 2 731 572**
**DE - A - 2 844 810**
**FR - A - 1 050 933**
**GB - A - 1 500 245**
**US - A - 2 706 716**

(73) Proprietor: **THE DOW CHEMICAL COMPANY**
**Dow Center 2030 Abbott Road Post Office Box 1967**
**Midland Michigan 48640 (US)**

(72) Inventor: **Lane, George Ashel**
**3802 Wintergreen Drive**
**Midland Michigan (US)**
Inventor: **Rossow, Harold Everett**
**2888 Poseyville Road**
**Midland Michigan (US)**

(74) Representative: **Hann, Michael, Dr. et al,**
**Marburger Strasse 38**
**D-6300 Giessen (DE)**

Hydrated magnesium nitrate reversible phase change compositions and their preparation

The invention relates to reversible liquid/solid phase change compositions. More particularly, the invention relates to hydrated $Mg(NO_3)_2$ phase change compositions containing nucleating additives to modify the supercooling properties of the $Mg(NO_3)_2$ liquid phase.

AT—B—322 504 discloses a heat storage material that is used in a rigid material body which is lending stability to the molten phase form for a uniform distribution of seed crystals. Various components of the composition are mentioned such as silicates, aluminate, ferrite, carbon black, magnesium oxide and silica. As a specific composition a mixture of 97 percent $Mg(NO_3)_2$ and 3 percent MgO is mentioned.

DE—A1—28 44 810 describes a super cooled liquid and a method for the production of said liquid. The materials which can serve as undercooled liquids are magnesium nitrate, hexahydrate and sodium borate and others.

DE—A1—27 31 572 relates to a heat storage material based on calcium chloride hexahydrate and a seed former or a nucleating agent. Barium carbonate, strontium carbonate, barium fluoride, barium hydrofluoride and strontium fluoride are listed as nucleating agents.

DE—A1—25 50 106 relates to a heat storage material. This material comprises calcium chloride hexahydrate and a nucleating agent. As nucleating agents barium hydroxide octahydrate, water-free barium hydroxide, strontium hydroxide octahydrate and water-free strontium hydroxide are disclosed.

FR—A—10 50 933 relates to a heat reservoir which comprises from 1 to 5 percent by weight of borax and as remainders either $Na_2SO_4$ and water or a mixture containing $Na_2HPO_4$, water and glass with an irregular surface.

$Mg(NO_3)_2 \cdot 6H_2O$ undergoes a phase transition at about 89°C (about 192°F) releasing or alternately absorbing a substantial quantity of latent heat of fusion. As such, the material has advantageous properties for use as an encapsulated heat storage medium for use in conjunction with solar energy systems for hydronic heating and off peak electrical power heat storage applications. In order to improve the material for such applications, however, there is a need to develop additives or a series of additives to modify the supercooling properties of hydrated $Mg(NO_3)_2$ compositions, and most advantageously, additives which are highly effective in a very small amount.

Hydrated $Mg(NO_3)_2$ means reversible liquid/solid phase change compositions which, exclusive of any additives or impurities, contain in admixture from 54 to 62 weight percent $Mg(NO_3)_2$, and the balance water (to 100 weight percent). Most preferred is a hydrate having a melt/freeze temperature of about 89°C (192°F), and prepared by admixing 57.8 weight percent $Mg(NO_3)_2$ in 42.2 weight percent water. The predominant crystal form in compositions of the invention is the hexahydrate.

"Supercooling" refers to a discrepancy between the temperature at which freezing initiates and the thawing temperature of a given hydrated $Mg(NO_3)_2$ composition, when cooled and heated under quiet conditions.

"Additive(s)" includes, in addition to the nucleating additives specified herein, precursors of such nucleating additives which are non-detrimental to the purposes of the invention.

The invention is the discovery of a new class of highly active nucleating additives for hydrated $Mg(NO_3)_2$ compositions. The invention particularly is a composition comprising hydrated $Mg(NO_3)_2$ which includes, as a nucleating additive, one or more of the following:

$MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$, $NaBO_2$.

The nucleating additive is added in an amount effective to suppress the supercooling properties of the hydrated $Mg(NO_3)_2$ liquid phase, and preferably in an amount not exceeding 5.0 weight percent of the weight of the phase change composition. A sufficient amount of the additive(s) is present in the preferred practice to suppress supercooling to no greater than 4°C, and preferably no greater than 2°C, taken on an averaging basis over repeated cycles.

The invention comprises a reversible liquid/solid phase change composition comprising hydrated $Mg(NO_3)_2$ and as a nucleating additive, one or more of $MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$, or $NaBO_2$, said nucleating additive being added to the composition to suppress average supercooling of the $Mg(NO_3)_2$ liquid phase to 4°C, or less.

The invention further comprises a method of preparing a hydrated $Mg(NO_3)_2$ composition of suppressed supercooling properties, comprising admixing uniformly in such composition, one or more of $MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$, or $NaBO_2$, to suppress average supercooling of the $Mg(NO_3)_2$ liquid phase to 4°C, or less.

The effective amount of the additive(s) is determined by testing a given composition over repetitive phase change cycles. A given nucleating additive, if present in an insufficient amount may, for example, exhibit only temporary effectiveness. Such behavior is overcome by adding slightly greater amounts of that given additive.

The compositions hereof are ideally packaged in individual encapsulating means for use as a heat storage device. Exemplary of suitable and known encapsulating means for the heat storage compositions herein described, are water impervious foils of plastic/metal laminates. Also, closed cell plastic foams have been suggested in which the heat storage composition may be encapsulated within the cells of the foam structure, as illustrated, for example, in U.S.—A—4,003,426. Other useful encapsulating means are metal or plastic containers, such as inexpensive aerosol cans; metal or plastic pipe, such as extruded polyethylene pipe; and the like. Further details respecting such encapsulating means are given in Report Nos. ORO/5217-8 and NSF RANN SE C906 FR76 1, both available from the National Technical Information Service, Springfield, Virginia.

### Example

The data of the Table below are generated by preparing hydrated $Mg(NO_3)_2$ samples according to the ratios indicated, and wherein the mixed samples of each specified ratio are placed into a two-ounce (56.8 ml) glass vial, which is then heated to about 100°C under agitation to achieve a uniform dispersion or admixture. A glass-encased thermocouple is inserted through the cap of each vial to measure temperature changes at the center of each sample prior to, during, and after freezing. The cooling temperature is controlled and maintained with the range of 20—25°C (room temperature). Sample No. 21, below, is a control sample of analytical grade $Mg(NO_3)_2$ hydrated with deionized water.

## TABLE

| Sample | | | Additive Material | wt. % | No. of Tests | Supercooling Ave. °C |
|---|---|---|---|---|---|---|
| 1 | 46.24g $Mg(NO_3)_2$ + 33.76 g $H_2O$ | | $Mg(OH)_2$ | 0.1 | 68 | 0.2 |
| 2 | " | " | MgO | 0.1 | 66 | 0.1 |
| 3 | " | " | $MgCO_3$ | 0.1 | 5 | 0.0 |
| 4 | " | " | $Ca(OH)_2$ | 0.1 | 5 | 0.0 |
| 5 | " | " | CaO | 0.1 | 5 | 0.0 |
| 6 | " | " | $CaCO_3$ | 0.1 | 5 | 0.0 |
| 7 | " | " | $MgSO_4$ | 0.1 | 15 | 0.3 |
| 8 | " | " | " | 0.5 | 10 | 0.0 |
| 9 | " | " | $CaSO_4$ | 0.1 | 5 | 0.0 |
| 10 | " | " | " | 0.5 | 10 | 1.0 |
| 11 | " | " | $CuSO_4$ | 0.5 | 10 | 0.5 |
| 12 | " | " | $NiSO_4$ | 0.5 | 10 | 0.9 |
| 13 | " | " | $CoSO_4$ | 0.5 | 10 | 1.1 |
| 14 | " | " | $ZnSO_4$ | 0.5 | 10 | 2.8 |
| 15 | " | " | $Sr(OH)_2$ | 0.1 | 5 | 0.0 |
| 16 | " | " | $SrCO_3$ | 0.1 | 5 | 0.0 |
| 17 | " | " | $Ba(OH)_2$ | 0.1 | 13 | 0.0 |
| 18 | " | " | BaO | 0.1 | 12 | 0.0 |
| 19 | " | " | $BaCO_3$ | 0.1 | 18 | 0.1 |
| 20 | " | " | $NaBO_2$ | 0.5 | 10 | 0.5 |
| 21 | " | " | none | — | 6 | 11.0 |

It is understood that nucleating additives other than as specifically taught herein may be used in conjunction with the highly effective additives of Sample Nos. 1—20 to prepare improved $Mg(NO_3)_2$ phase change compositions. While the data also illustrate that very little of the additives used herein produce marked benefits (average supercooling less than about 4°C) such additives, of course, may be incorporated in larger amounts, but should not exceed an amount of 5.0 weight percent of the weight of the phase change composition. Preferably, the amount of the additive is from 0.02 to 2.0 weight percent, and most preferably from 0.05 to 0.5 weight percent of the weight of the phase change composition.

## Claims

1. A reversible liquid/solid phase change composition comprising hydrated $Mg(NO_3)_2$ and a nucleating additive, characterized in that the hydrated $Mg(NO_3)_2$ consists of 54 to 62 weight percent of $Mg(NO_3)_2$ and the balance is water to 100 weight percent and as nucleating additive one or more of MgO, $Mg(OH)_2$, $CoSO_4$, $ZnSO_4$, $Sr(OH)_2$, $SrCO_3$, $Ba(OH)_2$, BaO, $BaCO_3$ or $NaBO_2$, said nucleating additive being added to the composition to suppress average supercooling of the $Mg(NO_3)_2$ liquid phase to 4°C. or less.

2. The composition of Claim 1 having added thereto one or more of the nucleating additives to suppress average supercooling of the

$Mg(NO_3)_2$ liquid phase to 2°C, or less.

3. The composition of Claim 1 or 2, wherein the hydrated $Mg(NO_3)_2$ consists of 57.8 weight percent $Mg(NO_3)_2$ and the balance is water to 100 weight percent.

4. The composition of Claim 1, 2 or 3 hermetically contained within encapsulating means.

5. The composition of any one of Claims 1 to 4 wherein the nucleating additive is present in an amount not greater than 5.0 weight percent of the weight of the phase change composition.

6. The composition of Claim 5 wherein the nucleating additive is present in an amount of from 0.02 to 2.0 weight percent of the weight of the phase change composition.

7. The composition of Claim 5 wherein the nucleating additive is present in an amount of from 0.05 to 0.5 weight percent of the weight of the phase change composition.

8. A method of preparing a reversible liquid/solid phase change composition of suppressed supercooling properties containing hydrated $Mg(NO_3)_2$ and a nucleating additive characterized by admixing uniformly a hydrated $Mg(NO_3)_2$ consisting of 54 to 62 weight percent $Mg(NO_3)_2$ and the balance is water to 100 weight percent with one or more of $MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$ or $NaBO_2$, to suppress average supercooling of the $Mg(NO_3)_2$ liquid phase of 4°C. or less.

9. The method of Claim 8 including the step of adding one or more of the nucleating additives to suppress average supercooling of the $Mg(NO_3)_2$ liquid phase to 2°C, or less.

10. The method of Claim 8 or 9, wherein the hydrated $Mg(NO_3)_2$ consists of 57.8 weight percent $Mg(NO_3)_2$ and the balance is water to 100 weight percent.

11. The method of Claim 8, 9 or 10, including the step of adding the nucleating additive in an amount not greater than 5.0 weight percent of the weight of the phase change composition.

12. The method of Claim 11, including the step of adding the nucleating additive in an amount of from 0.02 to 2.0 weight percent of the weight of the phase change composition.

13. The method of Claim 11, including the step of adding the nucleating additive in an amount of from 0.05 to 0.5 weight percent of the weight of the phase change composition.

**Revendications**

1. Composition susceptible de changement réversible de phase liquide/solide comprenant du $Mg(NO_3)_2$ hydraté et un additif de nucléation, caractérisée par le fait que le $Mg(NO_3)_2$ hydraté comprend de 54 à 62% en poids de $Mg(NO_3)_2$, le reste étant de l'eau jusqu'à 100% en poids, et, en tant qu'additif de nucléation, au moins l'un parmi $MgO$, $Mg(OH)_2$, $CoSO_4$, $ZnSO_4$, $Sr(OH)_2$, $SrCO_3$, $Ba(OH)_2$, $BaO$, $BaCO_3$ ou $NaBO_2$, cet additif de nucléation étant ajouté à la composition pour réduire la surfusion moyenne de la phase liquide $Mg(NO_3)_2$ à 4°C ou moins.

2. Composition selon la revendication 1, à laquelle a été ajouté au moins l'un des additifs de nucléation pour réduire la surfusion moyenne de la phase liquide de $Mg(NO_3)_2$ à 2°C ou moins.

3. Composition selon l'une des revendications 1 ou 2, dans laquelle le $Mg(NO_3)_2$ hydraté comprend 57,8% en poids de $Mg(NO_3)_2$, le complément à 100% en poids étant de l'eau.

4. Composition selon l'une des revendications 1, 2 ou 3, hermétiquement conditionnée dans des moyens d'encapsulage.

5. Composition selon l'une quelconque des revendications 1 à 4, dans laquelle l'additif de nucléation est présent en une quantité n'excèdant pas 5,0% en poids du poids de la composition susceptible de changement de phase.

6. Composition selon la revendication 5, dans laquelle l'additif de nucléation est présent en une quantité allant de 0,02 à 2,0% en poids du poids de la composition susceptible de changement de phase.

7. Composition selon la revendication 5, dans laquelle l'additif de nucléation est présent en une quantité allant de 0,05 à 0,5% en poids du poids de la composition susceptible de changement de phase.

8. Procédé de préparation d'une composition susceptible de changement réversible de phase liquide/solide, présentant des propriétés de surfusion réduites, contenant du $Mg(NO_3)_2$ hydraté et un additif de nucléation, caractérisé par le fait qu'on mélange uniformément un $Mg(NO_3)_2$ hydraté consistant en 54 à 62% en poids de $Mg(NO_3)_2$, le complément à 100% en poids étant de l'eau, avec au moins l'un parmi $MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$ ou $NaBO_2$, pour réduire la surfusion moyenne de la phase liquide $Mg(NO_3)_2$, à 4°C ou moins.

9. Procédé selon la revendication 8, incluant l'étape consistant à ajouter au moins l'un des additifs de nucléation pour réduire la surfusion moyenne de la phase liquide $Mg(NO_3)_2$, à 2°C ou moins.

10. Procédé selon l'une des revendications 8 ou 9, dans lequel le $Mg(NO_3)_2$ hydraté consiste en 57,8% en poids de $Mg(NO_3)_2$, le complément à 100% en poids étant de l'eau.

11. Procédé selon l'une des revendications 8, 9 ou 10, incluant l'étape consistant à ajouter l'additif de nucléation en une quantité n'excèdant pas 5,0% en poids du poids de la composition susceptible de changement de phase.

12. Procédé selon la revendication 11, incluant l'étape consistant à ajouter l'additif de nucléation en une quantité allant de 0,02 à 2,0% en poids du poids de la composition susceptible de changement de phase.

13. Procédé selon la revendication 11, incluant l'étape consistant à ajouter l'additif de nucléation en une quantité allant de 0,05 à 0,5% en poids du poids de la composition susceptible de changement de phase.

**Patentansprüche**

1. Zusammensetzung, deren Phasenzustand reversibel zwischen fest und flüssig umkehrbar ist, die Magnesiumnitrat-Hydrat ($Mg(NO_3)_2$) und einen die Kristallisation fördernden Zusatz enthält, dadurch gekennzeichnet, daß das Magnesiumnitrat-Hydrat aus 54 bis 62 Gewichtsprozent ($Mg(NO_3)_2$ und dem bis zu 100 Gewichtsprozent verbleibenden Rest aus Wasser besteht und die Zusammensetzung als Kristallkerne $MgO$, $Mg(OH)_2$, $CoSO_4$, $ZnSO_4$, $Sr(OH)_2$, $SrCO_3$, $Ba(OH)_2$, $BaO$, $BaCO_3$ oder $NaBO_2$ oder eine Mischung von zwei oder mehreren dieser Verbindungen in einer solchen Menge enthält, daß die durchschnittliche Unterkühlung der flüssigen $Mg(NO_3)_2$-Phase 4°C oder weniger beträgt.

2. Zusammensetzung nach Anspruch 1, dadurch gekennzeichnet, daß sie einen oder mehrere die Kristallisation fördernden Zusätze in einer solchen Menge enthält, daß die durchschnittliche Unterkühlung der flüssigen $Mg(NO_3)_2$-Phase 2°C oder weniger beträgt.

3. Zusammensetzung nach Anspruch 1 oder 2, dadurch gekennzeichnet, daß das Magnesiumnitrat-Hydrat aus 57,8 Gewichtsprozent $Mg(NO_3)_2$ und dem bis zu 100 Gewichtsprozent verbleibenden Rest aus Wasser besteht.

4. Zusammensetzung nach Ansprüchen 1, 2 oder 3, dadurch gekennzeichnet, daß sie in Hüllen hermetisch eingeschlossen ist.

5. Zusammensetzung nach jedem der Ansprüche 1 bis 4, dadurch gekennzeichnet, daß der die Kristallisation fördernde Zusatz in einer Menge von nicht mehr als 5 Gewichtsprozent bezogen auf das Gewicht der im Phasenzustand umkehrbaren Zusammensetzung vorhanden ist.

6. Zusammensetzung nach Anspruch 5, dadurch gekennzeichnet, daß der die Kristallisation fördernde Zusatz in einer Menge von 0,02 bis 2,0 Gewichtsprozent bezogen auf das Gewicht der im Phasenzustand umkehrbaren Zusammensetzung vorhanden ist.

7. Zusammensetzung nach Anspruch 5, dadurch gekennzeichnet, daß der die Kristallisation fördernde Zusatz in einer Menge von 0,05 bis 0,5 Gewichtsprozent bezogen auf das Gewicht der im Phasenzustand umkehrbaren Zusammensetzung vorhanden ist.

8. Verfahren zur Herstellung einer Zusammensetzung mit geringen Unterkühlungseigenschaften, deren Phasenzustand reversibel zwischen fest und flüssig umkehrbar ist, enthaltend Magnesiumnitrat-Hydrat und einen die Kristallisation fördernden Zusatz, gekennzeichnet durch gleichmäßiges Mischen eines Magnesiumnitrat-Hydrats, das aus 54 bis 62 Gewichtsprozent $Mg(NO_3)_2$ und dem bis zu 100 Gewichtsprozent verbleibenden Rest aus Wasser besteht, mit einer oder mehreren der Verbindungen von $MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$ oder $NaBO_2$ zur Verringerung der durchschnittlichen Unterkühlung der flüssigen Magnesiumnitrat-Phase auf 4°C oder weniger.

9. Verfahren nach Anspruch 8, dadurch gekennzeichnet, daß man einen oder mehrere der die Kristallisation fördernden Zusätze in einer solchen Menge zusetzt, daß die durchschnittliche Unterkühlung der flüssigen Magnesiumnitrat-Phase auf 2°C oder weniger verringert ist.

10. Verfahren nach Ansprüchen 8 oder 9, dadurch gekennzeichnet, daß man ein Magnesiumnitrat-Hydrat verwendet, das zu 57,8 Gewichtsprozent aus $Mg(NO_3)_2$ und dem bis zu 100 Gewichtsprozent verbleibenden Rest aus Wasser besteht.

11. Verfahren nach Ansprüchen 8, 9 oder 10, dadurch gekennzeichnet, daß man die die Kristallisation fördernden Zusätze in einer Menge von nicht mehr als 5 Gewichtsprozent bezogen auf das Gewicht der im Phasenzustand umkehrbaren Zusammensetzung zusetzt.

12. Verfahren nach Anspruch 11, dadurch gekennzeichnet, daß man die die Kristallisation fördernden Zusätze in einer Menge von 0,02 bis 2 Gewichtsprozent bezogen auf das Gewicht der im Phasenzustand umkehrbaren Zusammensetzung zusetzt.

13. Verfahren nach Anspruch 11, dadurch gekennzeichnet, daß man die die Kristallisation fördernden Zusätze in einer Menge von 0,05 bis 0,5 Gewichtsprozent bezogen auf das Gewicht der im Phasenzustand umkehrbaren Zusammensetzung zusetzt.